## Europäisches Patentamt

## European Patent Office

## Office européen des brevets

(19)

(11) Veröffentlichungsnummer : **0 336 182 B1**

(12)

# EUROPÄISCHE PATENTSCHRIFT

(45) Veröffentlichungstag der Patentschrift :
**09.09.92 Patentblatt 92/37**

(51) Int. Cl.$^5$ : **B23B 51/00**

(21) Anmeldenummer : **89104887.8**

(22) Anmeldetag : **18.03.89**

(54) **Bohrvorrichtung zum Herstellen, von Hinterschneidungen in nicht durchgehenden zylindrischen Vorbohrungen.**

(30) Priorität : **19.12.88 DE 3842683**
**02.04.88 DE 3811249**
**02.09.88 DE 3829813**

(43) Veröffentlichungstag der Anmeldung :
**11.10.89 Patentblatt 89/41**

(45) Bekanntmachung des Hinweises auf die
Patenterteilung :
**09.09.92 Patentblatt 92/37**

(84) Benannte Vertragsstaaten :
**AT BE CH DE ES FR GB GR IT LI LU NL SE**

(56) Entgegenhaltungen :
**EP-A- 0 242 638**
**DE-C- 910 376**
**US-A- 2 214 484**

(73) Patentinhaber : **Eischeid, Karl**
**Schulweg 23**
**W-5250 Engelskirchen (DE)**

(72) Erfinder : **Eischeid, Karl**
**Schulweg 23**
**W-5250 Engelskirchen (DE)**

(74) Vertreter : **Sturies, Herbert et al**
**Patentanwälte Dr. Ing. Dipl. Phys. Herbert Sturies Dipl. Ing. Peter Eichler Brahmsstrasse 29, Postfach 20 12 42**
**W-5600 Wuppertal 2 (DE)**

## Beschreibung

Die Erfindung bezieht sich auf eine Bohrvorrichtung zum Herstellen von Hinterschneidungen in nicht durchgehenden zylindrischen Vorbohrungen, mit einer Antriebsmaschine, an die ein axial beaufschlagbares Bohrwerkzeug mit einer außerhalb der Vorbohrung gelegenen Verbindungskupplung gelenkig angeschlossen ist, bei der ein Kupplungsstück der Verbindungskupplung und das Bohrschaftende patrizen/matrizenartig zusammengebaut sind, mit einer an der Spitze des Bohrwerkzeugs radial über den Bohrschaftumfang vorstehenden Seitenschneide, die von einer am Bohrwerkzeug vorhandenen, radial abstützbaren Schrägfläche radial verschwenkbar ist, wobei der Bohrschaft auf seinem der Seitenschneide gegenüberliegenden Außenumfang eines zylindrischen Schaftabschnitts in einem das Einstecken in die Vorbohrung gestattenden Maße abgeflacht ist.

Eine derartige Vorrichtung ist aus der DE-A-36 20 389 bekannt. Der Bohrschaft des bekannten Bohrwerkzeugs hat einen dem Durchmesser der Vorbohrung etwa entsprechenden Durchmesser, so daß sich das Bohrwerkzeug mit dem oberen Ende seines Bohrschafts beim Herstellen der Hinterschneidung zusätzlich zur Abstützung direkt an der Sohle der Vorbohrung oder an einem in der Vorbohrung vorhandenen Druckstück auch oben, am Hals der Vorbohrung abstützen kann, und zwar radial, so daß hier der Gelenkpunkt für das radiale Auswandern der Seitenschneide liegt. Die dabei auftretenden Kräfte werden vom Bohrschaft ohne weiteres auf den Werkstoff übertragen, in dem sich die Vorbohrung befindet. Eine derartige Bohrvorrichtung ist jedoch nicht einsetzbar, wenn das zu bohrende Werkstück dünn ist, weil dann insbesondere für grössere Hinterschneidungstiefen eine unannehmbare große Schrägstellung des Bohrschafts erforderlich wäre, und/oder wenn das zu bohrende Material die Übertragung radialer Kräfte beim Herstellen der Hinterschneidung nicht zuläßt, beispielsweise weil es bruchempfindlich ist, wie Glas oder Marmor.

Aus der DE-C-910 376 ist ein Werkzeug zum Hinterstechen von Sacklöchern bekannt, das mit einem Ende von einer Bohrspindel einer Antriebsmaschine aufgenommen wird, einen den Radius einer Vorbohrung unterschreitenden Schaftradius aufweist und bohrseitig eine radial über den Bohrschaftumfang vorstehende Seitenschneide aufweist, mit der hinterstochen wird. Hierzu ist es erforderlich, eine kegelige Führungsspitze des Bohrschafts auf einer entsprechend kegeligen Sohle der Vorbohrung durch Axialbewegung derart zu verschieben, daß die Seitenschneide radial auslenkt wird. Hierzu ist der Schaft elastisch. Dieses Erfordernis des bekannten Werkzeugs begrenzt seinen Einsatz auf solche Werkstücke, die die vorbeschriebene Arbeitsweise zulassen, wobei die Elastizität des Werkzeugschafts besondere Anpassungen an den jeweiligen Werkstoff des Werkstücks erfordern.

Demgegenüber liegt der Erfindung die Aufgabe zugrunde, eine Bohrvorrichtung der vorstehend genannten Art so zu verbessern, daß auch dünne und/oder empfindliche Werkstoffe, wie Glas oder Marmor mit einer insbesondere kurzen, eine Hinterschneidung aufweisenden Bohrung versehen werden können.

Diese Aufgabe wird bei einer Vorrichtung der eingangs gennanten Art dadurch gelöst, daß das Kupplungsstück zylindrisch mit halbkugeligem Ende und das Bohrschaftende mit entsprechend halbkugeligem Boden ausgebildet sind, daß beide Kupplungsteile (Kupplungsstück, Bohrschaftende) von einem Querstift drehantriebsmäßig miteinander verbunden sind, der die radialen Schwenkbewegungen der Seitenschneide gestattet, daß der Bohrschaft einen ersten, seine Axialbewegungsstellung sowie einen zweiten, die maximalen radiale Verschwenkung der Seitenschneide bestimmenden Schwenkstellunganschlag aufweist, die jeweils an dem Kupplungsstück der Verbindungskupplung zur Anlage kommen, daß die radial abstützbare Schrägfläche bohrschaftendseitig angeordnet und von einem axial beweglichen Druckkörper der Verbindungskupplung beaufschlagbar ist, daß der antriebsseitige Radius des zylindrischen Schaftabschnitts des Bohrschaft kleiner als der über Seitenschneide gemessene Schaftradius ist, und daß der gelenkige Anschluß des Bohrwerkzeugs an die Antriebsmaschine relativ zum Bohrwerkstück radial ortsfest ist.

Für die erfindungsgemäße Bohrvorrichtung ist von Bedeutung, daß das Bohrwerkzeug radial ortsfest an die Antriebsmaschine angeschlossen ist. Infolgedessen kann sich der Bohrschaft radial über seinen gelenkigen Anschluß an der Antriebsmaschine abstützen, so daß das zu hinterschneidende Material entsprechend entlastet wird. Dazu wird auch der antriebsseitige Radius des Bohrschafts kleiner als der Vorbohrungsradius gehalten. Eine Anlage des Bohrschafts am Werkstoff wird also durch die vorstehend umrissene Ausbildung der Bohrvorrichtung vermieden. Durch die radial ortsfeste Anlenkung des Bohrwerkzeugs an der Antriebsmaschine wird auch erreicht, daß die Schrägstellung des Bohrwerkzeugs beim Herstellen der Hinterschneidung unabhängig von den Abmessungen der Vorbohrung sein kann. Es ist also beispielsweise möglich, flache Bohrungen großen Durchmessers mit vergleichsweise geringer Schrägstellung des Bohrwerkzeugs bzw. des Bohrschafts herzustellen, so daß die Seitenschneide infolge der geringen Schrägstellung mit praktisch gegen Null tendierender axialer Bewegungskomponente radial in den Werkstoff einschneiden kann. Das dient einer formgetreuen Herstellung der Hinterschneidungen und erleichtert die Herstellungen von Spezialformen ohne Aufwand bei der Ausbildung des Bohrwerkzeugs bzw. der Seitenschneide. Mit besonders geringen Schrägstellungen des Bohrwerkzeugs beim Herstellen der Hinterschneidung kann gearbeitet werden, wenn der gelenkige Anschluß des Bohrwerkzeugs an die Antriebsmaschine außerhalb der Vorbohrung angeordnet ist. Diese Anordnung ist für kurze Bohrungen besonders günstig.

Die vorbeschriebene Bohrvorrichtung dient dazu, auch dünne und/oder empfindliche Werkstoffe mit einer eine Hinterschneidung aufweisenden Bohrung zu versehen. Bei dünnen bzw. empfindlichen Werkstoffen kann es problematisch sein, das entstehende feine Bohrmehl abzuführen. Im Bereich der Bohrung befindliches überschüssiges Bohrmehl kann jedoch zu einer Zerstörung des Werkstücks oder zum Weglaufen des Bohrers führen, woraus Ungenauigkeiten der herzustellenden Bohrung resultieren. Demgegenüber wird die Bohrvorrichtung so verbessert, daß ein verbessertes exaktes Bohren erreicht wird, insbesondere bei dünnen und/oder empfindlichen Werkstoffen.

Für die vorbeschriebene Ausgestaltung ist von Bedeutung, daß das Bohrwerkzeug mit der Verbindungskupplung schwenkgelenkig verbunden ist. Infolgedessen kann der Bohrschaft Schwenkstellungsanschläge aufweisen, welche die Relativlage des Bohrschafts zu der Verbindungskupplung bestimmen und damit Kupplungstoleranzen der herkömmlichen Verbindungskupplungen weitgehend ausschalten. Damit kann präziser gebohrt werden. Der Bohrmehlanfall ist nur noch vom exakten Halten der Bohrvorrichtung beim Bohren abhängig.

Mittels des axial beweglichen Druckkörpers wird die Schrägfläche des Bohrwerkzeugs axial beaufschlagt und infolgedessen erreicht, daß sich der Bohrschaft entgegen der Fliehkraftwirkung aus dem einen Schwenkstellungsanschlag in Richtung auf seinen anderen bewegt. Dabei erfolgt der Vortrieb der Seitenschneide und infolgedessen die Herstellung der Hinterschneidung. Die bauliche Vereinigung des beweglichen Druckkörpers mit der Verbindungskupplung antriebsseitig vom Schwenkgelenk ermöglicht eine kompakte Ausbildung der Bohrvorrichtung im Bereich der Verbindungskupplung. Die Ausbildung des Kupplungsstücks und des zugehörigen Bohrschaftendes mit zylindrischem Querschnitt gestattet es, diese Teile formenmäßig einfach zu gestalten und preiswert herzustellen. Es können beispielsweise kreiszylindrische Querschnitte gewählt werden. Die Verbindung der beiden Kupplungsteile gestaltet sich bei Anwendung eines Querstifts ebenfalls sehr einfach, wobei letzterer mit Rücksicht auf die zu ermöglichenden Schwenkbewegungen der Seitenschneide quer zu letzterer und deren radialer Vortriebsbewegung angeordnet ist. Der Querstift hat zur Folge, daß die Bewegungsmöglichkeit des Bohrschafts relativ zum Kupplungsstück auf die Schwenkbewegungsrichtungen der Seitenschneide beschränkt ist, was aber auch den Vorteil bietet, eine präzise und insbesondere quer dazu toleranzfreie Schwenkbewegung zu ermöglichen.

Im Sinne einer geringen Schrägstellung des Bohrwerkzeugs und/oder im Sinne einer Verringerung der Gefahr der Anlage des Bohrschafts an der Wand der Vorbohrung ist es, wenn der Bohrschaft exzentrisch zur Rotationsachse des Bohrwerkzeugs angeordnet ist. Durch diese Ausgestaltung wird auch das Herstellen von Hinterschneidungen bei im Verhältnis zu ihrer Tiefe durchmesserstarken Vorbohrungen erleichtert.

Für besonders feinspanende Werkstoffe, die in der Regel auch spröde sind, wie beispielsweise Glas, ist die den Querschnitt der Hinterschneidung aufweisende Seitenschneide in Drehrichtung ballig und zumindest auf ihren Schneidflächen mit Bohrpulver versehen. Das Abtragen des Werkstoffs im Bereich der Hinterschneidung kann infolgedessen sehr schonend und ohne die Gefahr vorgenommen werden, daß der Werkstoff springt. Als Bohrpulver wird dabei z.B. Diamantpulver verwendet, das fest auf den Schneidflächen sitzt.

Vorteilhafterweise wird die Vorrichtung so ausgebildet, daß eine das Schwenken des radial unbeaufschlagten, rotierenden Bohrschafts durch Fliehkraft an seinen ersten Anschlag bewirkende Schaftform vorhanden ist. Die Schaftform des Bohrschafts kann so bestimmt werden, daß letzterer seine exakte axiale Ausrichtung bei allen Bohrvorgängen mit nichtvorhandener gewollter Radialbeaufschlagung beibehält. Infolgedesen ist es auch möglich, das Bohrwerkzeug nicht nur zur Herstellung der Hinterschneidung zu verwenden, sondern bei entsprechender Ausbildung der Bohrschaftspitze auch zur Herstellung der Vorbohrung. Daher braucht nach dem Herstellen der Vorbohrung kein Wechsel des Bohrwerkzeugs vorgenommen zu werden, um von der Herstellung der Vorbohrung zur Herstellung der Hinterschneidung überzugehen.

Bei einer Ausgestaltung der Erfindung ist der radial unbeaufschlagte Bohrschaft gleichachsig zur Rotationsachse der Verbindungskupplung des mit einer Axialschneide versehenen Bohrwerkzeugs angeordnet, und zwischen der Seitenschneide und der Verbindungskupplung ist eine bei maximalem radialem Vortrieb der Vorbohrung parallele Abflachung des Bohrschafts vorhanden. Durch die Gleichachsigkeit des Bohrschafts und der Verbindungskupplung wird erreicht, daß die Axialschneide bei Beaufschlagung in den Werkstoff eindringen und dabei die Vorbohrung herstellen kann. Die Fliehkraftwirkung am Bohrschaft ist ausreichend, um diesen beim Vorbohren stabil zu halten, so daß er also nicht ausknickt. Dabei versteht es sich, daß die Schaftform jeweils entsprechend abgestimmt werden muß, also mit Ausnehmungen und/oder Wülsten od.dgl.

Von besonderem Vorteil ist es, daß der Druckkörper ein rotationssymmetrisches Griffstück hat, das außen auf dem Druckkörper mit einem Wälzlager axial unverschieblich angebracht ist. Mit Hilfe des Griffstücks kann der Druckkörper axial verschoben werden, wodurch die benötigten radialen Vortriebskräfte ohne weiteres erzeugt werden können. Sofern die Vorrichtung als Handbohrvorrichtung eingesetzt wird, ermöglicht das Griffstück deren Führen in der Nähe der Bohrstelle. Das kann bei weniger empfindlichen Werkstücken durchaus ausreichend sein, um Vorbohrung und Hinterschneidung in einem Arbeitsgang problemlos herstellen zu können. Die bei freiem Antrieb gegebene Reibungsmitnahme des Griffstücks über das Wälzlager schadet nicht, da das Griffstück ohne weiteres von Hand festgehalten werden kann.

Um eine baulich einfache Ausbildung zu erreichen, ist die Bohrvorrichtung so ausgebildet, daß der Druckkörper eine an der Verbindungskupplung axial federnd abgestützte Hülse mit einem sich bohrschaftseitig erweiternden Druckkonus ist, und daß die Schrägfläche eine Konusringfläche des Bohrschaftendes ist.

Beispielsweise ist die Bohrvorrichtung so gestaltet, daß die Schaftform aus einer oberhalb des Gelenkpunkts der Verbindungskupplung, der Seitenschneide diametral gegenübergelegenen Ausnehmung des Bohrschafts besteht. Eine derartige Ausgestaltung kommt insbesondere dann infrage, wenn der Bohrschaft vergleichsweise kurz ist bzw. wenn die bohrungsseitig vom Gelenkpunkt gelegene Masse des Bohrschafts in etwa gleich seiner oberhalb dieses Gelenkpunkts gelegenen Masse ist, so daß die angesprochene Ausnehmung des Bohrschafts zu einer entsprechenden Verlagerung der Seitenschneide im Drehantriebsfall führt, wobei keine die Schrägfläche der Bohrschaftspitze beaufschlagende Axialkraft mit Bodenabstützung vorhanden sein darf.

Eine Ausnehmung kann auch bohrungsseitig vom Gelenkpunkt angeordnet sein, wenn sie in einem Ausmaß gestaltet werden kann, das eine genügende Schwerpunktsverlagerung im Sinne einer Schrägstellungsänderung des Bohrschafts bis an den ersten Schwenkstellungsanschlag gestattet. Das ist beispielsweise dann gegeben, wenn die Schaftform bei einer Ausbildung der Seitenschneide aus Stahl oder Hartmetall eine in Rotationsrichtung vor der Schneide gelegene, die Schneide zum Werkstoffabheben freilassende Schaftausnehmung ist. Eine derartige Ausnehmung kann auch zusätzlich zu der vorgenannten, oberhalb des Gelenkpunkts der Verbindungskupplung befindlichen Ausnehmung wirksam sein.

Dadurch, daß das Kupplungsstück pratrizenartig und das Bohrschaftende matrizenartig ausgebildet sind, und das Bohrschaftende einen den ersten Schwenkstellungsanschlag bildenden Wandabschnitt und einen breiteren, den zweiten Schwenkstellungsanschlag bildenden Wandabschnitt aufweist, vereinfacht sich die formenmäßige Ausgestaltung der Verbindungskupplung. Zusätzlich zu den kreiszylindrischen Querschnitten des Kupplungsstücks und des Bohrschaftendes, dessen Bohrungswand den zweiten Schwenkstellungsanschlag bildet, braucht lediglich ein dann zweckmäßigerweise zumindest zum Teil ebenfalls kreiszylinderförmiger Wandabschnitt als erster Schwenkstellungsanschlag ausgebildet werden, außer einer die spezielle Schaftform bildenden Ausnehmung, die ebenfalls vorteilhafterweise dem kreisringförmigen Querschnitt des Bohrschaftendes angepaßt ist.

Um zu erreichen, daß das entstehende Bohrmehl den Hinterschneidungsvorgang nicht behindern soll, sind der Bohrschaft und das Kupplungsstück mit fluchtenden Spül- und/oder Luftkanälen versehen, im zwischen beiden Kanälen gelegenen Übergangsbereich ist eine Bohrungserweiterung vorhanden, und/oder der Kanal ist im Bereich des Querstifts von einer Ringnut dieses Querstifts ausgebildet.

Wenn das matrizenartig ausgebildete Bohrschaftende antriebsseitig vom Querstift etwa ebenso lang ist, wie der andere Bohrschaftabschnitt, wirkt sich das durch die antriebsseitige größere Masse des Bohrschaftendes stabilisierend auf die Stellung des einschub- bzw. auszugbereiten Bohrschafts aus und erleichtert den rauhen Umgang mit der Bohrvorrichtung.

Damit das Bohrwerkzeug auf einfache Weise präzise hergestellt werden kann, und zwar sowohl für eine werkstückseitige als auch für antriebsseitige Anordnung der Schrägfläche des Bohrschafts, ist die Bohrvorrichtung so ausgebildet, daß der zwischen der Seitenschneide und der Verbindungskupplung befindliche Bohrschaftaußenumfang dem den zweiten Schwenkstellungsanschlag bildenden Wandabschnitt gleichachsig ist, und daß der dem vorgenannten Bohrschaftaußenumfang gegenüberliegende Bohrschaftaußenumfang dem den zweiten Schwenkstellungsanschlag bildenden Wandabschnitt gleichachsig ist.

Die Bohrvorrichtung kann so ausgebildet sein, daß die mit Axialschneiden und/oder mit Bohrpulver versehene Bohrschaftspitze mit einem Axialvor- oder -rücksprung versehen oder quer zur Schaftachse eben ausgebildet ist. Mit Axialschneiden oder mit Schneidpulver versehene Bohrschaftspitzen können bei allen infrage kommenden Werkstoffen mit Erfolg zum Herstellen der Vorbohrung angewendet werden. Dabei leisten der Axialvor- oder -rücksprung Geradführungsdienste im Sinne einer Zentrierung des Bohrschafts. Es ist aber auch möglich, die Bohrschaftspitze quer zur Rotationsachse eben auszubilden, wenn die Schneideigenschaften und die Fliehkraftwirkung des Bohrschafts derart aufeinander abgestimmt sind, daß ein unsauberer Axialvorschub des Bohrwerkzeugs vermieden wird. Vorteilhaft ist es, wenn die Antriebseinrichtung ortsfest angebracht oder mit einer Stillhalteeinrichtung versehen ist. In beiden Fällen werden Relativbewegungen zwischen der Antriebseinrichtung und der Bohrstelle vermieden, so daß der Bohrschaft störungsfrei umlaufen kann.

Die Figuren 1 bis 2b zeigen die Herstellung einer Vorbohrung und die exzentrische Anordnung des Bohrshafts. Diese Figuren sind lediglich zur Veranschaulichung aufgeführt.

Die Erfindung wird anhand eines in den Figuren 3 bis 9 dargestellten Ausführungsbeispiels erläutert. Es zeigt:

Fig.1 eine Gesamtansicht einer Bohrvorrichtung zur Herstellung von zylindrischen Vorbohrungen von der Seite,

Fig.1a ein Bohrwerkzeug für die Bohrvorrichtung der Fig.1 einschließlich einer gelenkigen Verbindungskupplung,

Fig.1b,c das Bohrwerkzeug der Fig.1a in vergrößerten Darstellungen,

Fig.2 ein Bohrwerkzeug ähnlich demjenigen der Fig.1a in vergrößerter Darstellung und teilweise geschnitten,

Fig.2a den Schnitt B-B der Fig.2,

Fig.2b den Schnitt A-A der Fig.2,

Fig.3 eine der Fig.1 ähnliche Darstellung mit einer Bohrvorrichtung zum Herstellen sowohl der Vorbohrung als auch der Hinterschneidung,

Fig.4,5 vergrößerte, teilweise geschnittene Darstellungen von Betätigungseinrichtungen zur radialen Beaufschlagung des Bohrschafts,

Fig.6 bis 9a unterschiedlich ausgerüstete Bohrschäfte gemäß der Erfindung.

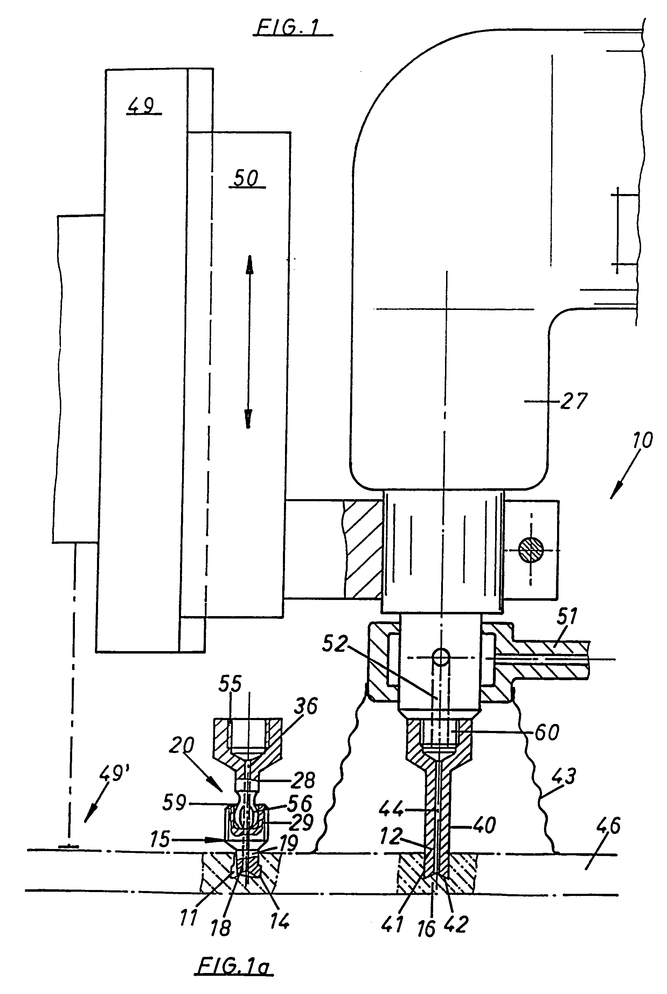

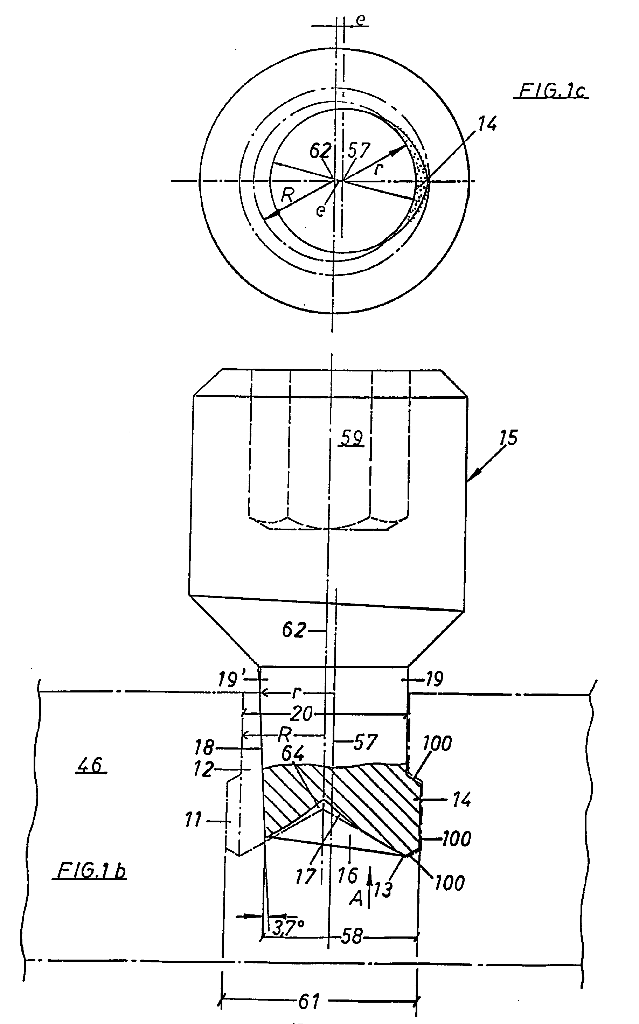

Fig.1 zeigt in einer Seitenansicht eine Bohrvorrichtung 10 zum Herstellen von zylindrischen Vorbohrungen 12 mit einem Vorbohrer 40. Letzterer wird von einer Antriebsmaschine 27 drehangetrieben, die ihrerseits an einem Bohrständer 49 befestigt ist, der einen Schlitten 50 zum in den Richtungen des Doppelpfeils erfolgenden Anheben oder Absenken der Maschine 27 hat. Der Bohrständer 49 seinerseits ist ortsfest zum Werkstück 46 angeordnet, also beispielsweise mit einem Saugfuß 49′ darauf befestigt oder auch an einem Gestell befestigt, auf dem das Werkstück 46 seinerseits befestigt ist.

Aus Fig.1 ist zunächst die Herstellung der Vorbohrung 12 ersichtlich, wozu der zylindrische Vorbohrer 40 auf einen z.B. mit Gewinde versehenen Anschlußstutzen 60 der Maschine 27 geschraubt wird. Dieser Vorbohrer 40 hat eine kegelige Vertiefung 42 zur Erzeugung des Sohlenkegels 16 der Vorbohrung 12 des Werkstücks 46. Die gesamte Spitze 41 des Vorbohrers 40 ist mit Bohrpulver versehen, also beispielsweise mit fest auf der Spitze angebrachtem Diamantpulver, welches den Werkstoff des Werkstücks 46 zerspant. Stattdessen kann auch ein üblicher, mit seiner Spitze entsprechend profiliert ausgebildeter Spiralbohrer verwendet werden.

Damit das Zerspanungsprodukt, ein feinpulveriges Bohrmehl, nicht zu einer Verstopfung und zu damit verbundenen mechanischen Kräften führt, und damit die Zerspanungswärme abgeführt werden kann, hat der Vorbohrer 40 eine exzentrische Bohrung 44, durch die gemäß Fig.1 z.B. Wasser oder Luft mittels eines Spülmittelkopfes 51 und einer Anschlußbohrung 52 durch den Anschlußstutzen 60 der Antriebsmaschine 27 hindurch zugeführt wird. Der Kopf 51 ist mit einem Spritzschutz 43 versehen.

Nach der Herstellung der Vorbohrung 12 wird die Hinterschneidung 11 mit einem Bohrwerkzeug 15 hergestellt, das über eine im Prinzip aus der DE-A-36 20 389 bekannte Verbindungskupplung 20 am Anschlußstutzen 60 angelenkt wird. Die Verbindungskupplung 20 besteht im wesentlichen aus einem Kupplungsstück 28, das maschinenseitig ein auf den Anschlußstutzen 60 passendes Anschlußgewindeloch 55 hat und bohrseitig mit einem balligen Außenmehrkant 56 versehen ist, der gelenkartig in eine Innenmehrkantausnehmung 59 des Bohrwerkzeugs 15 drehformschlüssig eingreift und gegen unbeabsichtigtes Herausziehen z.B. durch eine außenendige Radiusverkleinerung der Innenmehrkantausnehmung 59 gesichert ist. Das Bohrwerkzeug 15 ist mit einem Bohrschaft 19 versehen, dessen oberes Ende 29 außerhalb bzw. oberhalb des Werkstücks 46 angeordnet ist und dort unabhängig vom Bohrlochdurchmesser die erforderlichen radialen Abmessungen haben kann.

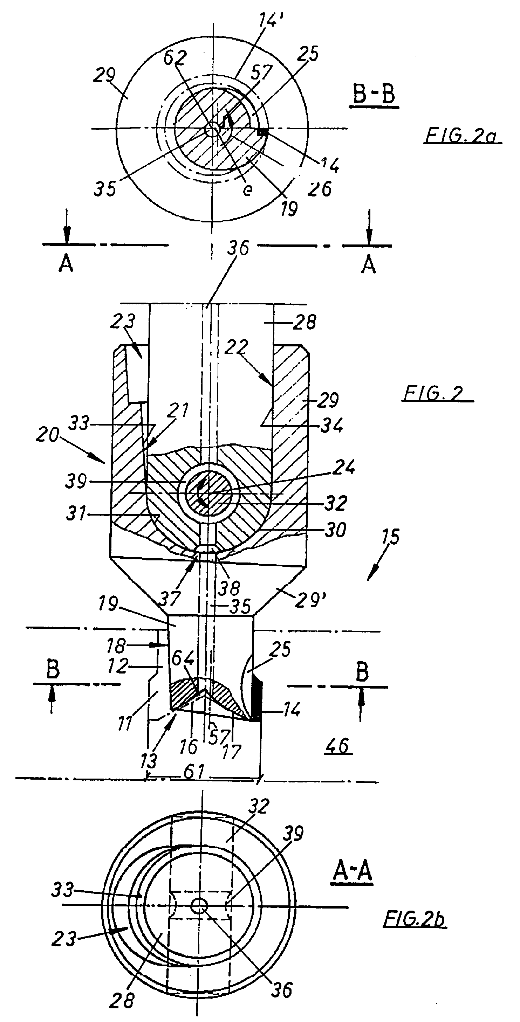

Der sich an das Bohrschaftende 29 bohrlochseitig anschließende Bohrschaft 19 ist exzentrisch angeordnet. Die Exzentrizität ergibt sich aus der Verlagerung e der Bohrschaftachse 57 gemäß Fig.2a zu der Rotationsachse 62 des Bohrwerkzeugs 15 bzw. der Antriebsmaschine 27. Der Bohrschaft 19 hat einen abgeflachten Außenumfang 18, dessen Abflachung sich praktisch über die gesamte Länge des Bohrlochs erstreckt und so bemessen ist, daß der Bohrschaft 19 trotz des Vorhandenseins der Seitenschneide 14 problemlos in das Bohrloch hineingesteckt werden kann. Die Abflachung 18 ist dabei beispielsweise mit einem Winkel von 3,7° geneigt, im allgemeinen ca. 4°, und erstreckt sich gleichmäßig zwischen einer Spitze 13 des Bohrschafts 19 bis zu dessen zylindrischen Bereich 19′ vor dem Bohrschaftende 29, vgl. Fig.1b. Im Bereich der Spitze 13 ergibt sich dabei ein Durchmesser 58 über die Seitenschneide 14 gemessen, der etwas kleiner als der Durchmesser 20 der Vorbohrung 12 ist.

Außerdem ist der Bohrschaft 19 im Bereich seines zylindrischen Teils 19′ mit einem Radius r versehen, der kleiner ist, als der Radius R des Bohrlochs 12, was dazu beiträgt zu verhüten, daß der Bohrschaft 19 beim Herstellen der Hinterschneidung 11 innerhalb des Bohrlochs 12 zur Anlage kommt.

Die Seitenschneide 14 ist gemäß Fig.1c, der Ansicht A in Fig.1b, in Drehrichtung des Bohrwerkzeugs 15

EP 0 336 182 B1

ballig ausgebildet und ihre Schneidflächen 100 sind mit Bohrpulver versehen.

Die Spitze 13 des Bohrschafts 19 ist mit einer kegelförmigen Vertiefung 64 versehen, die eine ballig konvex gewölbte Schrägfläche 17 aufweist. Beim Herstellen der Hinterschneidung 11 drückt der Bohrschaft 19 mit der Schrägfläche 17 auf die kegelförmige Sohle 16 der Vorbohrung 12 und rutscht dabei radial ab, so daß die Seitenschneide 14 radial vorgetrieben wird, wobei sich der maximale Durchmesser 61 der Hinterschneidung ergibt. Die konvexe Wölbung der Schrägfläche 17 gewährleistet dabei geringe Flächenpressungen und im Bereich der Spitze der Sohle 16 einen Freiraum zur Vermeidung einer Auflage des Bohrschafts 19.

Beim Herstellen der Hinterschneidung 11 ist das Bohrwerkzeug 15 an der Antriebsmaschine 27 bzw. an dem Kupplungsstück 28 der Verbindungskupplung 20 angelenkt. Das Kupplungsstück 28 bzw. deren Außenmehrkant 56 bildet einen Gelenkpunkt 24, um den der Bohrschaft 19 bei seiner Rotationsbewegung durch Maschinenantrieb taumeln kann. Infolge der Exzentrizität des Bohrschafts 19 wird dieser beim Hinterschneidungsbeginn zunächst mit seiner extremen Schiefstellung arbeiten, bis sich mit wachsender Hinterschneidungstiefe eine zunehmende Geradstellung des Bohrschafts 19 ergibt, bei der er sich mit seiner Achse 57 in einer zur Rotationsachse parallelen Lage befindet, in der seine Vertiefung 64 symmetrisch über der Sohle 16 liegt. Die Hinterschneidung 14 ist dann fertiggestellt.

Es versteht sich, daß auch das Bohrwerkzeug 15 eine Spülmittelbohrung 36 aufweist, die in Fig.1a dargestellt ist und durch eine das Kupplungsstück 28 durchsetzende Anschlußbohrung 35 vom Kopf 51 durch die Anschlußbohrung 52 mit Spülmittel versorgt wird. Der Abfluß des Spülmittels bildet wegen der stets vorhandenen großen freien Querschnitte zwischen dem Bohrschaft 19 und dem Werkstück 46 kein Problem.

Das in Fig.2 dargestellte Bohrwerkzeug 15 mit Verbindungskupplung 20 unterscheidet sich von dem in Fig.1a,b,c dargestellten zunächst in der Ausbildung des Kupplungsstücks 28 und des Bohrschaftendes 29. Das Kupplungsstück 28 hat im Bereich seines patrizenartigen Eingriffs in das matrizenartige Bohrschaftende 29 kreiszylindrischen Querschnitt und ein halbkugeliges Ende 30. Antriebsmaschinenseitig ist es ähnlich Fig.1a mit einem auf den Anschlußstutzen 60 passenden Anschlußgewindeloch versehen. Es kann dort auch kreiszylindrisch ausgebildeten Querschnitt zum Einsetzen in ein Spannfutter der Antriebsmaschine 27 haben, insbesondere dann, wenn das Werkzeug zum Herstellen der Vorbohrung 12 ein Spiralbohrer mit entsprechendem zylindrischen Ende ist.

Das matrizenartige Bohrschaftende 29 hat eine kreiszylindrische, nicht näher bezeichnete Bohrung mit halbkugeligem Boden 31 und wird von dem patrizenartigen Kupplungsstück 28 im wesentlichen ausgefüllt.

Die Verbindungskupplung 20 zwischen den beiden Teilen 28,29 hat als wesentliches, formschlußschaffendes Verbindungsteil einen Querstift 32, der den Gelenkpunkt 24 bzw. die Gelenkachse definiert. Durch diese Achse wird festgelegt, daß sich das Kupplungsstück 28 und das Bohrschaftende 29 lediglich in den durch den Doppelpfeil bestimmten Richtungen relativ zueinander bewegen können. Diese Richtungen bestimmen die Bewegungsrichtungen der Seitenschneide 14.

Die maximale Schwenkamplitude wird durch das Zusammenspiel des Kupplungsstücks 28 und des Bohrschaftendes 29 bestimmt. Hierzu hat das Bohrschaftende 29 einen Wandabschnitt 33, der einen ersten Schwenkstellungsanschlag 21 bildet. Außerdem hat das Bohrschaftende 29 einen zweiten Schwenkstellungsanschlag 22, gebildet von einem Wandabschnitt 34 des Bohrschaftendes 29. Der zweite Schwenkstellungsanschlag 22 wird gemäß Fig.2 durch die kreiszylindrische Bohrung des Bohrschaftendes 29 bestimmt, während der erste Schwenkstellungsanschlag 21 durch eine zur Längsachse des Bohrschafts 19 abgeschrägte Fläche bestimmt wird, wie aus der Zeichnung ersichtlich ist.

Im oberen Endbereich des Bohrschaftendes 29 ist eine Ausformung 23 in Gestalt einer Ausnehmung vorhanden, die der Seitenschneide 14 diametral gegenüber angeordnet ist. Diese Ausnehmung wird mit einer den schrägen Wandabschnitt 33 entsprechenden Schräge hergestellt, so daß sich in Fig.2b die ersichtliche Sichelform ergibt. Die Ausformung 23 in Gestalt einer Ausnehmung hat die Folge, daß der ihr gegenüberliegende Bohrschaftendabschnitt bei rotierendem Bohrwerkzeug 15 durch Zentrifugalwirkung radial nach außen beschleunigt wird und infolgedessen der Schwenkstellungsanschlag 21 zur Anlage am Kupplungsstück 28 kommt. Infolgedessen wird eine in Fig.2 im Uhrzeigersinn erfolgende Bewegung des Bohrschafts um den Gelenkpunkt 24 erfolgen, mit der Folge, daß sich die Seitenschneide 14 aus der Hinterschneidung 11 entfernt und das gesamte Bohrwerkzeug in eine Auszugstellung gelangt. Es versteht sich, daß eine solche Schwenkbewegung nur möglich ist, wenn das Bohrwerkzeug 15 nicht in Einschubrichtung axial so beaufschlagt wird, daß sich die Spitze 13 mit ihrer Schrägfläche 17 auf der Sohle 16 des Werkstücks 46 abstützen kann.

Fig.2a zeigt im Querschnitt die Ausbildung des Bohrschafts 19 im Bereich der Seitenschneide 14, die in Drehumfangsrichtung 26 von Werkstoff des Bohrschafts 19 abgestützt ist und einen Drehkreis 14′ beschreibt. Außerdem hat der Bohrschaft 19 in Drehrichtung vor der Seitenschneide 14 eine Ausnehmung 25, die dem problemlosen Werkstoffabheben dient. Darüber hinaus bildet sie eine Schaftform aus, die im Sinne einer Erleichterung des Schwenkens des Bohrwerkzeugs 15 um den Gelenkpunkt 24 im Rotationsfall dient. Hierzu kann die Ausnehmung 25 auch eine Ausführungsform haben, die von der in der Zeichnung dargestellten Aus-

6

EP 0 336 182 B1

gestaltung abweicht. Von Bedeutung ist auch hier, daß eine das Schwenken des axial unbeaufschlagten, rotierend angetriebenen Bohrschafts an seinen ersten Anschlag 21 bewirkende Schaftform geschaffen wird. Im übrigen ist das Bohrwerkzeug 15 ausgebildet, also beispielsweise bezüglich seiner Abflachung 18, wie es oben beschrieben wurde.

Der Bohrschaft 19 und das Kupplungsstück 28 sind jeweils mit Kanälen 35,36 versehen, die miteinander fluchten und sich von der Spitze 13 des Bohrwerkzeugs 15 durchgehend bis zum halbkugeligen Boden 31 einerseits und andererseits vom halbkugeligen Ende 30 in Richtung zum Anschluß der Antriebsmaschine 27 erstrecken, wo der Kanal 36 in die Anschlußbohrung 52 überleitet. Da das Kupplungsstück 28 und der Bohrschaft 19 Winkelbewegungen ausführen, ist eine Bohrungserweiterung 38 am Kupplungsstück 28 und/oder 29 vorhanden, um sicherzustellen, daß stets der volle Querschnitt zur Verfügung steht. Im Bereich des Querstifts 32 wird der Kanal 36 von einer Ringnut 39 des Querstifts 32 gebildet, die die Lagerung bzw. den formschlüssigen Zusammenbau des Kupplungsstücks 28 und des Bohrschaftendes 29 nicht beeinflußt. Mit Hilfe der Kanäle 35,36 kann Spülmittel zugeführt werden, beispielsweise um die Bohrmehlansammlung oder die Wärmeabfuhr aus dem Bohrbereich zu beeinflussen, oder es wird abgesaugt. Der Einsatz der Kanäle 35,36 in dem einen oder anderen Sinne hängt auch davon ab, welcher Werkstoff bearbeitet wird. Das Werkstück 46 ist im wesentlichen plattenförmig, also vergleichsweise dünn. Es kann beispielsweise aus Glas bestehen, aber auch aus Kunststoff, z.B. aus einem duroplastischen Werkstoff.

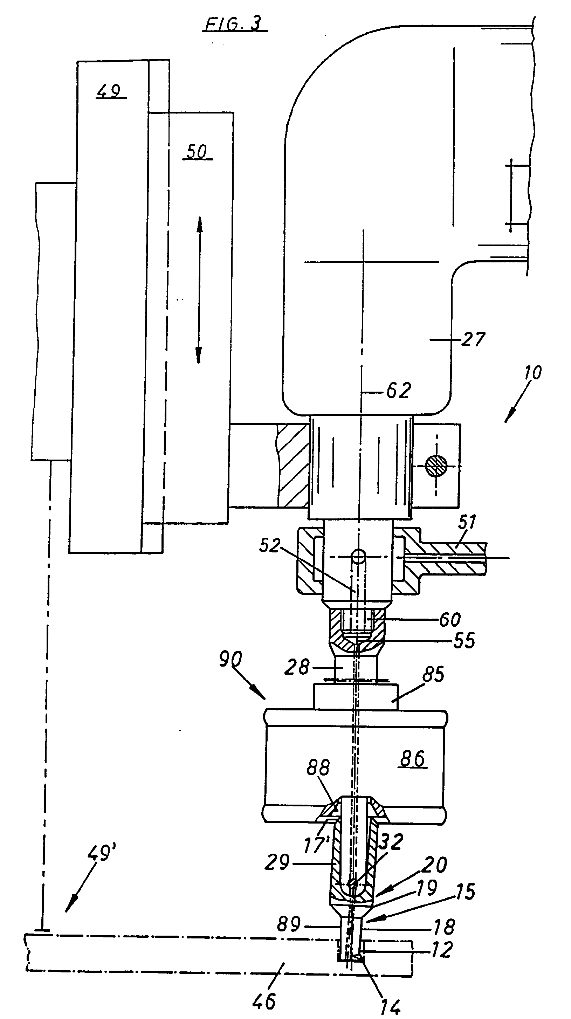

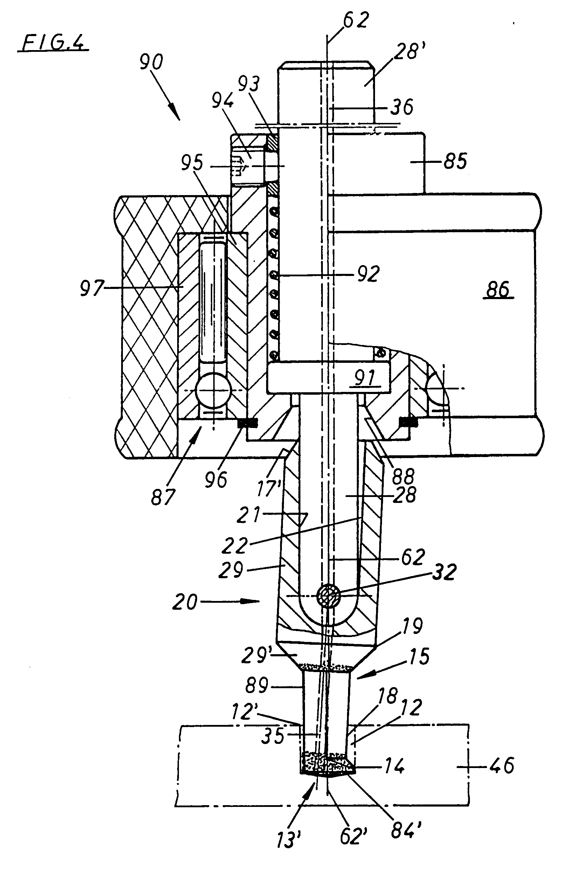

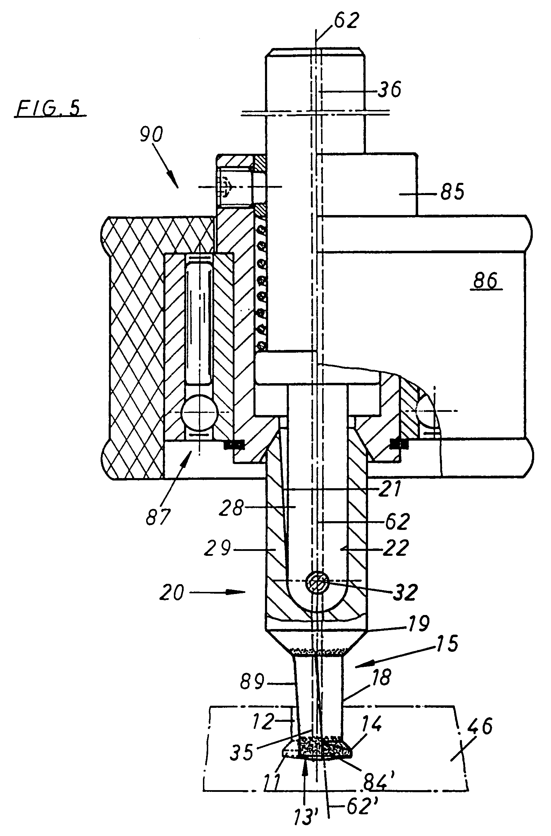

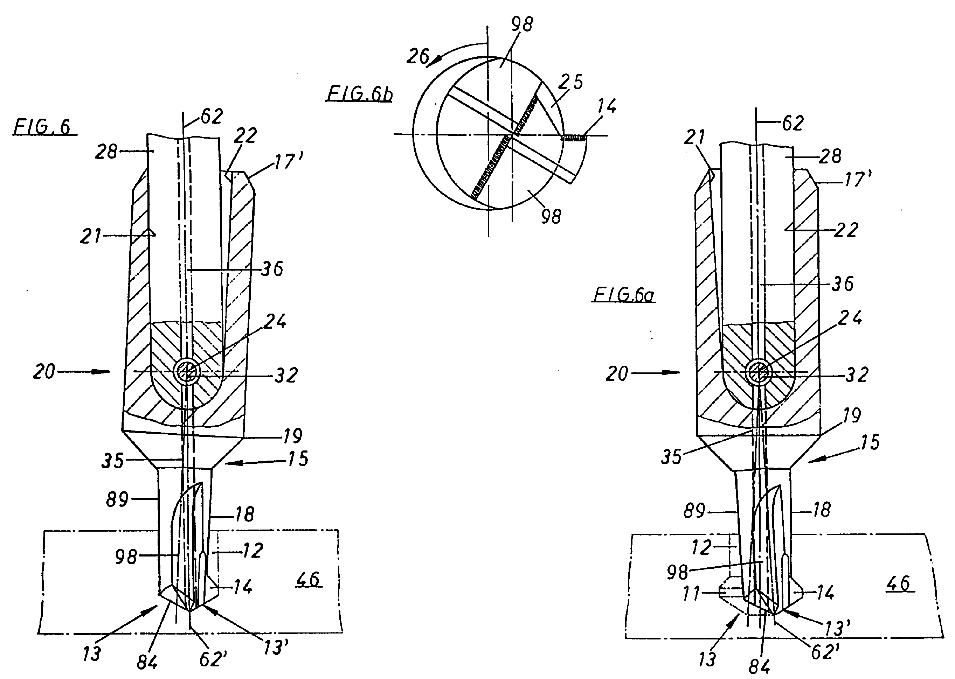

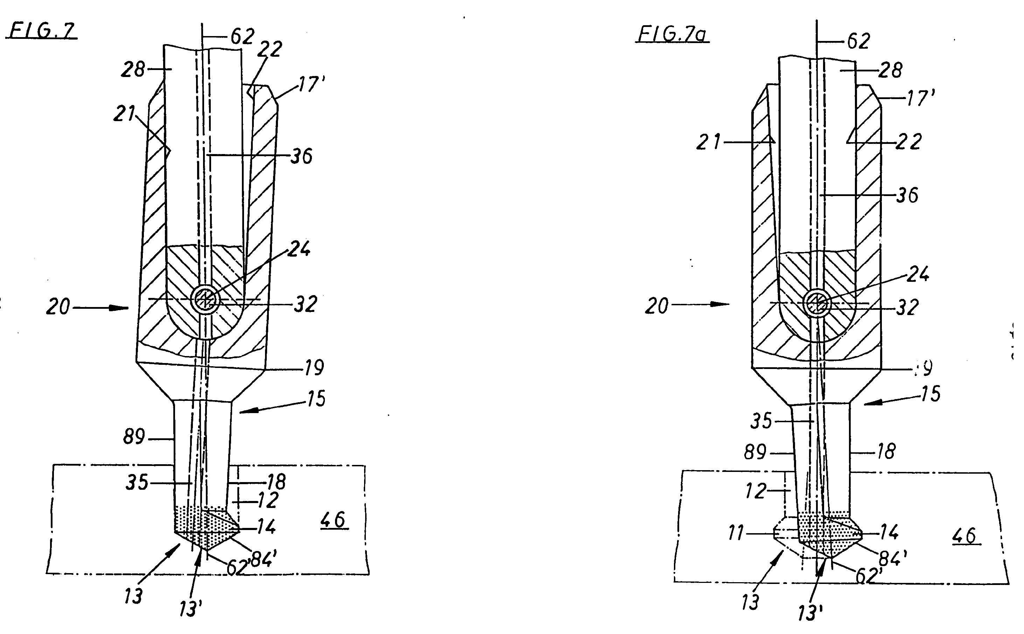

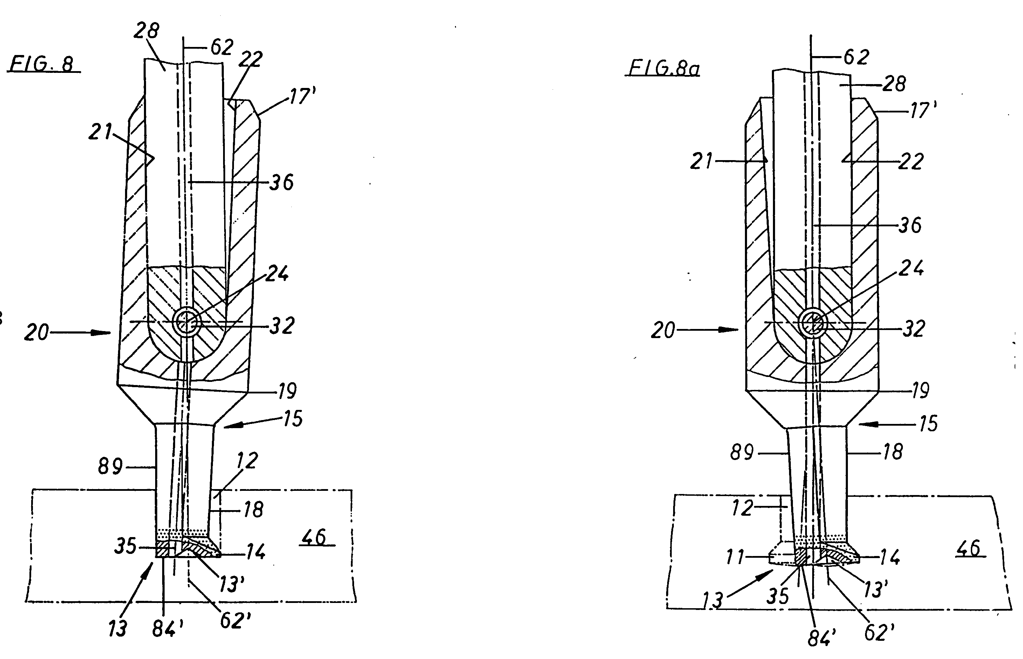

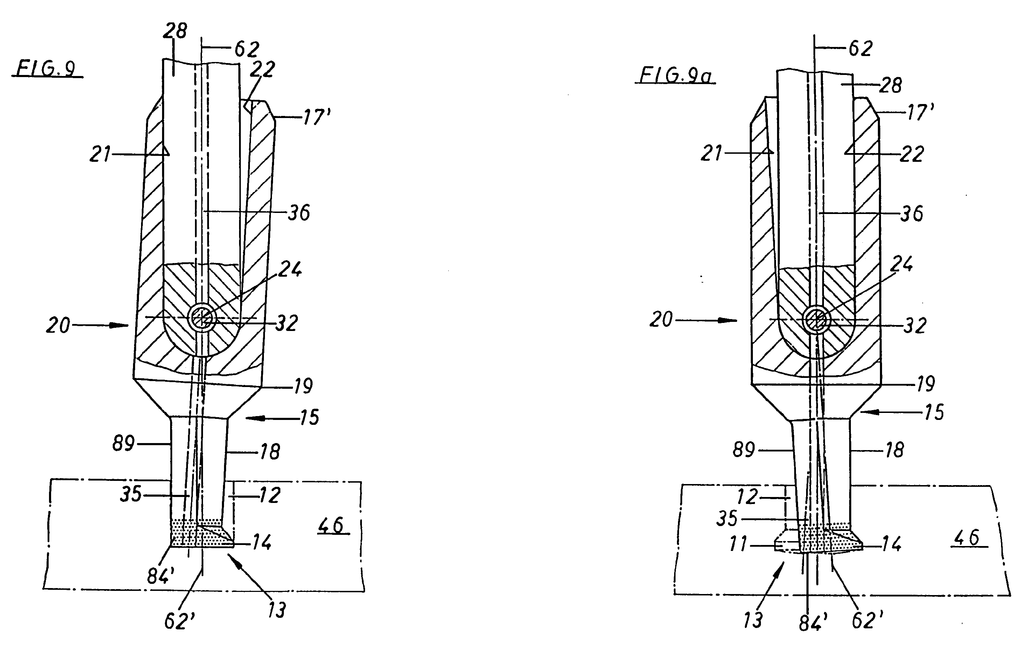

Die in Fig.3 dargestellte Bohrvorrichtung 10 unterscheidet sich von derjenigen der Fig.1 im wesentlichen durch ein anderes Bohrwerkzeug 15. Soweit jedoch Übereinstimmung besteht, wird dieselbe Darstellung verwendet und es werden dieselben Bezugszeichen verwendet. Auf die vorstehende Beschreibung wird insoweit Bezug genommen. Ähnliches gilt für das Bohrwerkzeug 15, welches in den Fig.4,5 vergrößert dargestellt ist und zu dem in den Fig.6,6a,6b bis 9,9a geringfügig abgeänderte Ausführungsbeispiele dargestellt sind. Auch in diesen Figuren werden Teile mit derselben Funktion mit den gleichen Bezugszeichen bezeichnet.

Fig.3 veranschaulicht die Anordnung der Bohrvorrichtung mit einem Bohrständer 49, der seinerseits ortsfest zum Werkstück 46 angeordnet ist. Der Bohrständer 49 hält die Antriebseinrichtung bzw. Maschine 27 mit einem vertikal beweglichen Schlitten 50. An einem Anschlußstutzen 60 der Maschine 27 ist das Bohrwerkzeug 15 mittels einer Verbindungskupplung 20 angebracht, die am maschinenseitigen Ende ihres Kupplungsstücks 28 ein auf den Anschlußstutzen 60 passendes Anschlußgewindeloch 55 hat.

Das Bohrwerkzeug 15 besteht im wesentlichen aus einem mit einer Seitenschneide 14 versehenen Bohrschaft 19, dessen oberes Ende 29 analog zur Ausgestaltung gemäß Fig.2 matrizenförmig ausgebildet ist und mit seiner Ausnehmung das patrizenförmige untere Ende des Kupplungsstücks 28 aufnimmt. Das Kupplungsstück 28 und das Bohrschaftende 29 sind über den Querstift 32 gelenkig miteinander verbunden. Um das Bohrwerkzeug 15 bzw. den Bohrschaft 19 um den Querstift 32 verstellen zu können, ist an der Verbindungskupplung 20 eine Betätigungseinrichtung 90 vorhanden, die im wesentlichen aus einem axial beweglichen Druckkörper 85 besteht, der mit einem Griffstück 86 axial abwärts bewegbar ist, so daß ein Druckkonus 88 des Druckkörpers 85 die vom Bohrschaftende 29 gebildete Schrägfläche 17' beaufschlagen und damit den Bohrschaft 19 entsprechend verschwenken kann.

Anhand der Fig.4,5 wird die Betätigungseinrichtung 90 näher beschrieben. Das Kupplungsstück 28 der Verbindungskupplung 20 ist mit einem Antriebsanschluß 28' versehen, der abweichend von dem in Fig.3 Dargestellten als Einspannzapfen ausgebildet ist. Der Antriebsanschluß 28' besitzt einen Ringkragen 91, auf dem sich eine Druckfeder 92 mit einem Ende abstützt, während das andere Ende dieser Druckfeder 92 an einem den Antriebsanschluß 28' umgebenden Gleitring 93 abgestützt ist, der axial verschieblich auf dem Antriebsanschluß 28' sitzt. Die Druckfeder 92 ist von einem Druckkörper 85 umgeben, der als Hülse ausgebildet ist. Am oberen Ende des Druckkörpers 85 ist eine mit Innenmehrkant versehene Befestigungsschraube 94 querverstellbar vorhanden, die in eine Ausnehmung des Gleitrings 93 eingreift. Der Druckkörper 85 hat auf seinem Außenumfang ein Wälzlager 87, dessen Innenring 95 an einer Schulter des Druckkörpers 85 anliegt und in dieser Stellung mit einem Sicherungsring 96 gehalten ist. Der Außenring 97 des Wälzlagers 87 ist mit einem Griffstück 86 fest verbunden, das gegenüber dem Druckkörper 85 drehbeweglich, aber axial unverstellbar ist.

Der Druckkörper 85 hat bohrschaftseitig einen sich erweiternden Druckkonus 88, dessen Schräge auf die Schrägfläche 17' am Bohrschaftende 29 abgestimmt ist. Wird der Druckkörper 85 axial nach unten verschoben, so gelangen der Druckkonus 88 und die Schrägfläche 17' in gegenseitigen Eingriff, in dem sich der Bohrschaft 29 radial am Druckkörper 85 abstützt. Bei laufender Antriebsmaschine 27 kann diese Abstützung erreicht werden, indem das Griffstück 86 erfaßt und vertikal abwärts bewegt wird, entgegen der Kraft der Druckfeder 92, die Rückstellfunktion hat. Mit Hilfe des Griffstücks 86 kann der Vortrieb der Seitenschneide 14 bestimmt werden, so daß die Hinterschneidung 11 hergestellt wird. Fig.5 zeigt den Zustand nach vollständiger Herstellung der Hinterschneidung 11 bei maximal abwärts bewegtem Griffstück 86 und dementsprechend vollständiger Schwenkung des Bohrschafts 19 im Gegenuhrzeigersinn.

Aus den Fig.4 bis 9a ist zu ersehen, daß der Bohrschaft 19 ähnlich demjenigen der Fig.2 zwei Schwenk-

7

stellungsanschläge 21,22 aufweist. Der Schwenkstellungsanschlag 21 bestimmt die Axialstellung des Bohrschaftes 19, in der dessen Schaftachse 62' mit der Rotationsachse 62 der Verbindungskupplung 20 fluchtet. Der Schwenkanschlag 22 erlaubt hingegen eine Stellung des Bohrschafts 19, in der die Seitenschneide 14 ihren maximalen radialen Vortrieb erfahren hat. Die Schwenkanschläge 21,22 werden durch Wandabschnitte derjenigen Bohrung des Bohrschaftsendes 29 bestimmt, die das Kupplungsstück 28 aufnimmt. Insofern wird auf die Beschreibung zu Fig.2 Bezug genommen.

Die Ausbildung des Bohrschaftendes 29 entspricht ebenfalls weitgehend der Darstellung gemäß Fig.2, und zwar hinsichtlich der den radial unbeaufschlagten, rotierenden Bohrschaft 19 mit seinem Schaftende 29 an seinen ersten Anschlag 21 bewegenden Schaftform. Auch hier ist also das Bohrschaftende 29 derart unwuchtig ausgebildet, daß das Bohrwerkzeug 15 bei Rotation die in Fig. 4 dargestellte Stellung einnimmt. Die Unwuchtigkeit ist dadurch vergrößert, daß das Bohrschaftende 29 vergleichsweise lang ist, etwa ebenso lang, wie der andere, die Seitenschneide 14 tragende Bohrschaftabschnitt.

Die in den Fig.4 bis 9a dargestellten Bohrwerkzeuge 15 unterscheiden sich von demjenigen der Fig.2 des weiteren weseritlich dadurch, daß die Schaftachse 62' des Bohrschafts 19 mit der Rotationsachse 62 der Verbindungskupplung 20 fluchtet, wenn das obere Bohrschaftende 29 nicht radial beaufschlagt ist. Infolgedessen ist es möglich, das Bohrwerkzeug außer zur Herstellung der Hinterschneidung 11 zugleich auch bzw. vorab zur Herstellung der Vorbohrung 12 zu benutzen. Hierzu ist die Bohrschaftspitze 13 mit Axialschneiden 84 versehen, vgl. insbesondere Fig.6,6a. Diese Axialschneiden 84 graben sich bei entsprechender axialer Beaufschlagung durch die Antriebsmaschine 27 vertikal in das Werkstück 46 ein und stellen die Vorbohrung 12 her. Der dabei anfallende Bohrstaub wird durch vertikale Freischneidungen 98 des Bohrschafts 19 abtransportiert.

Das Bohrwerkzeug 15 der Fig.7,7a hat eine mit Bohrpulver 84' versehene Bohrschaftspitze 13, die mit einem Axialvorsprung 13' versehen ist. Aufgrund dieses Vorsprungs 13' wird der Bohrschaft 19 bei seinem Drehantrieb ebenso geführt, wie das Bohrwerkzeug 15 der Fig.6 bis 6b. Das Bohrwerkzeug der Fig.8,8a ist mit einem Rücksprung 13' versehen, der ebenfalls eine Führung gegen radiales Ausweichen des Bohrschafts 19 bei axialem Vortrieb darstellt. Das Bohrwerkzeug 15 der Fig.9,9a ist an seiner Bohrschaftspitze 13 quer zur Schaftachse 62' eben ausgebildet, so daß sich bei axialem Vortrieb eine Vorbohrung 12 mit entsprechend ebener Sohle ergibt. Bei diesem Werkzeug 15 entfällt eine Führung gegen radiales Ausweichen des Bohrschafts 19, so daß die Antriebseinrichtung 27 entweder ortsfest angebracht oder mit einer Stillhalteeinrichtung versehen sein sollte, mit der gewährleistet wird, daß von der Antriebsseite her keine Radialeinwirkungen auf das Bohrwerkzeug 15 übertragen werden. Die Ausgestaltung der Bohrspitze 13 gemäß Fig.9,9a bzw. 4,5 aber auch 8,8a hat den Vorteil, daß das Werkstück 46 flacher sein kann, weil der Axialvorsprung 13' bzw. die Axialschneiden84 vollständig oder praktisch ganz entfallen. Darüber hinaus wird insbesondere bei den Ausführungsformen der Fig.4,5 und 9,9a vermieden, daß beim seitlichen Vortrieb der Seitenschneide 14 Sohlenwerkstoff von den Axialschneiden 84 bzw. vom Axialvorsprung 13' entfernt werden muß. Das könnte allerdings dadurch vermieden werden, daß das Bohrwerkzeug 15 vor dem Herstellen der Hinterschneidung 11 etwas bzw. um die Vorsprungtiefe der Axialschneiden 84 bzw. des Axialvorsprungs 13' angehoben wird.

Zur Ausgestaltung der Bohrwerkzeuge 15 gemäß den Fig.4 bis 9a ist noch darauf hinzuweisen, daß zwischen der Seitenschneide 14 und der Verbindungskupplung 20 eine Abflachung 18 des Bohrschafts 19 vorhanden ist, die bei maximalem radialem Vortrieb des Bohrschafts 19 der Vorbohrung 12 parallel ist. Dementsprechend ist der dieser Abflachung 18 gegenüberliegende Bohrschaftumfang 89 mit dem Radius der Vorbohrung 12 versehen. Durch diese Ausgestaltung des Bohrwerkzeugs 15 ergibt sich, daß der Bohrschaftaußenumfang im Bereich der Abflachung 18 gleichachsig und damit parallel zu demjenigen Wandabschnitt des Bohrungsendes 29 ist, welcher den Schwenkstellungsanschlag 22 bildet. In analoger Weise ist der Bohrschaftaußenumfang 89 gleichachsig bzw. parallel zu demjenigen Wandabschnitt, der den Schwenkstellungsanschlag 21 bildet. Eine derartige Gleichachsigkeit bzw. Parallelität ist auch für das Bohrwerkzeug 15 der Fig. 2 gegeben, so daß in allen Fällen eine einfache und vor allen Dingen exakte Herstellbarkeit der betreffenden Flächen des Bohrwerkzeugs 15 gegeben ist.Bei den Bohrwerkzeugen der Figuren 3 bis 9a trägt die links der Achse 62' vergleichsweise größere Masse dazu bei, daß der radial unbeaufschlagte drehend angetriebene Bohrschaft 19 an seinem Anschlag 21 gehalten wird.

Bei den Bohrwerkzeugen 15 der Fig.3 bis 9a sind ebenfalls aufeinander ausgerichtete bzw. aneinander anschliessende Spül- und/oder Luftkanäle 35,36 vorhanden. Im Bohrschaft 19 sind die Kanäle 35 jedoch so angeordent, daß sie bohrungssohlenseitig von der Schaftachse 62' münden, damit in ihrem Bereich kein sie verstopfender stehenbleibender Bohrpfropfen entstehen kann.

In allen Figuren 3 bis 9a wurde dargestellt, daß der die Seitenschneide 14 tragende Bohrschaftabschnitt mit dem Bohrschaftende 29 über einen kegelstumpfförmigen Schaftteil 29' verbunden ist. Das ergibt sich wegen der im Bereich des Gelenkstifts 32 im Vergleich zum werkstückseitigen Durchmesser größeren Durchmesser. Dieser Schaftteil 29 ist gemäß Fig.4 mit Bohrpulver zum Brechen der Kante 12' der Vorbohrung 12 versehen. Damit der Schaftteil 29 zur Anlage am Werkstück 46 kommen kann, muß die Länge des die Seiten-

EP 0 336 182 B1

schneide 14 tragenden Bohrschaftabschnitts auf die Länge der Vorbohrung 12 abgestimmt sein. Dies ist in den Zeichnungen nicht dargestellt. Auch bei einem Bohrwerkzeug gemäß Fig.2 könnte der Schaftteil 29' zum Kantenbrechen benutzt werden, wenn der die Seitenschneide 14 tragende Bohrschaftabschnitt kürzer als dargestellt ist, nämlich so lang, daß der Schaftteil 29' beim Herstellen der Hinterschneidung 11 infolge seines dabei gegebenen axialen Eindringens in die Vorbohrung 12 auf deren Kante aufsitzt.


**Patentansprüche**

1. Bohrvorrichtung (10) zum Herstellen von Hinterschneidungen in nicht durchgehenden zylindrischen Vorbohrungen (12), mit einer Antriebsmaschine (27), an die ein axial beaufschlagbares Bohrwerkzeug (15) mit einer ausserhalb der Vorbohrung gelegenen Verbindungskupplung (20) gelenkig angeschlossen ist, bei der ein Kupplungsstück (28) der Verbindungskupplung (20) und das Bohrschaftende (29) patrizen/matrizenartig zusammengebaut sind, mit einer an der Spitze (13) des Bohrwerkzeugs (15) radial über den Bohrschaftumfang vorstehenden Seitenschneide (14), die von einer am Bohrwerkzeug (15) vorhandenen, radial abstützbaren Schrägfläche (17') radial verschwenkbar ist, wobei der Bohrschaft (19) auf seinem der Seitenschneide (14) gegenüberliegenden Außenumfang eines zylindrischen Schaftabschnitts (19') in einem das Einstecken in die Vorbohrung (12) gestattenden Maße abgeflacht ist, **dadurch gekennzeichnet,** daß das Kupplungsstück (28) zylindrisch mit halbkugeligem Ende (30) und das Bohrschaftende (29) mit entsprechend halbkugeligem Boden (31) ausgebildet sind, daß beide Kupplungsteile (Kupplungsstück 28, Bohrschaftende 29) von einem Querstift (32) drehantriebsmäßig miteinander verbunden sind, der die radialen Schwenkbewegungen der Seitenschneide (14) gestattet, daß der Bohrschaft (19) einen ersten (21), seine Axialbewegungsstellung sowie einen zweiten (22), die maximalen radiale Verschwenkung der Seitenschneide (14) bestimmenden Schwenkstellunganschlag (21,22) aufweist, die jeweils an dem Kupplungsstück (28) der Verbindungskupplung (20) zur Anlage kommen, daß die radial abstützbare Schrägfläche (17') bohrschaftendseitig angeordnet und von einem axial beweglichen Druckkörper (85) der Verbindungskupplung (20) beaufschlagbar ist, daß der antriebsseitige Radius (r) des zylindrischen Schaftabschnitts (19') des Bohrschafts (10) kleiner als der über Seitenschneide (14) gemessene Schaftradius ist, und daß der gelenkige Anschluß des Bohrwerkzeugs (15) an die Antriebsmaschine (27) relativ zum Bohrwerkstück (46) radial ortsfest ist.

2. Vorrichtung nach Anspruch 1, **dadurch gekennzeichnet,** daß der Bohrschaft (19) exzentrisch zur Rotationsachse des Bohrwerkzeugs (15) angeordnet ist.

3. Vorrichtung nach Anspruch 1 oder 2, **dadurch gekennzeichnet,** daß die den Querschnitt der Hinterschneidung (11) aufweisende Seitenschneide (14) in Drehrichtung ballig und zumindest auf ihren Schneidflächen (100) mit Bohrpulver versehen ist.

4. Vorrichtung nach einem oder mehreren der Ansprüche 1 bis 3, **dadurch gekennzeichnet,** daß eine das Schwenken des radial unbeaufschlagten, rotierenden Bohrschafts (19) durch Fliehkraft an seinen ersten Anschlag (21) bewirkende Schaftform (23) vorhanden ist.

5. Vorrichtung nach einem oder mehreren der Ansprüche 1 bis 4, **dadurch gekennzeichnet,** daß der radial unbeaufschlagte Bohrschaft (19) gleichachsig zur Rotationsachse (62) der Verbindungskupplung (20) des mit einer Axialschneide (84) versehenen Bohrwerkzeugs (15) angeordnet ist, und daß zwischen der Seitenschneide (14) und der Verbindungskupplung (20) eine bei maximalem Verschwenken der Seitenschneide (14) der Vorbohrung (12) parallele Abflachung (18) des Bohrschafts (19) vorhanden ist.

6. Vorrichtung nach einem oder mehreren der Ansprüche 1 bis 5, **dadurch gekennzeichnet,** daß der Druckkörper (85) ein rotationssymmetrisches Griffstück (86) hat, das außen auf dem Druckkörper (85) mit einem Wälzlager (87) axial unverschieblich angebracht ist und/oder daß der Druckkörper (85) eine an der Verbindungskupplung (20) axial federnd abgestützte Hülse mit einem sich bohrschaftseitig erweiternden Druckkonus (88) ist, und daß die Schrägfläche (17') eine Konusringfläche des Bohrschaftendes (29) ist.

7. Vorrichtung nach einem oder mehreren der Ansprüche 1 bis 6, **dadurch gekennzeichnet,** daß die Schaftform (23) aus einer oberhalb des Gelenkpunkts (24) der Verbindungskupplung (20), der Seitenschneide (14) diametral gegenübergelegenen Ausnehmung des Bohrschafts (19) besteht und/oder daß die Schaftform bei einer Ausbildung der Seitenschneide (14) aus Stahl oder Hartmetall eine in Rotationsrichtung (26) vor der Schneide (14) gelegene, die Schneide (14) zum Werkstoffabheben freilassende Schaftaus-

9

nehmung (25) hat.

**8.** Vorrichtung nach einem oder mehreren der Ansprüche 1 bis 7, **dadurch gekennzeichnet,** daß das Kupplungsstück (28) patrizenartig und das Bohrschaftende (29) matrizenartig ausgebildet sind, und daß das Bohrschaftende (29) einen den ersten Schwenkstellungsanschlag (21) bildenden Wandabschnitt (33) und einen weiteren, den zweiten Schwenkstellungsanschlag (22) bildenden Wandabschnitt (34) aufweist.

**9.** Vorrichtung nach einem oder mehreren der Ansprüche 1 bis 8, **dadurch gekennzeichnet,** daß der Bohrschaft (19) und das Kupplungsstück (28) mit fluchtenden Spül- und/oder Luftkanälen (35,36) versehen sind, daß im zwischen beiden Kanälen (35,36) gelegenen Übergangsbereich (37) eine Bohrungserweiterung (38) vorhanden ist, und/oder daß der Kanal (36) im Bereich des Querstifts (32) von einer Ringnut (39) dieses Querstiftes (32) gebildet ist

**10.** Vorrichtung nach Anspruch 8, **dadurch gekennzeichnet,** daß das matrizenartig ausgebildete Bohrschaftende (29) antriebsseitig vom Querstift (32) etwa ebenso lang ist, wie der andere Bohrschaftabschnitt und-/oder daß der zwischen der Seitenschneide (14) und der Verbindungskupplung (20) befindliche Bohrschaftaußenumfang (Abflachung 18) dem den zweiten Schwenkstellungsanschlag (22) bildenden Wandabschnitt gleichachsig ist, und daß der dem vorgenannten Bohrschaftaußenumfang gegenüberliegende Bohrschaftaußenumfang (89) dem den zweiten Schwenkstellungsanschlag (21) bildenden Wandabschnitt gleichachsig ist.

**11.** Vorrichtung nach einem oder mehreren der Ansprüche 1 bis 10, **dadurch gekennzeichnet,** daß die mit Axialschneiden (84) und/oder mit Bohrpulver (84) versehene Bohrschaftspitze (13) mit einem Axialvoroder -rücksprung (13') versehen oder quer zur Schaftachse (62') eben ausgebildet ist und/oder daß die Antriebseinrichtung (27) ortsfest angebracht oder mit einer Stillhalteeinrichtung versehen ist.

**12.** Vorrichtung nach einem oder mehreren der Ansprüche 1 bis 11, **dadurch gekennzeichnet,** daß sich das Bohrschaftende (29) mit einem kegelförmigen Schaftteil (29') an den die Seitenschneide (14) tragenden Bohrschaftabschnitt anschließt, daß der Schaftteil (29') mit Bohrpulver versehen ist, und daß die Länge des die Seitenschneide (14) tragenden Bohrschaftabschnitts auf die Tiefe der Vorbohrung (12) im Sinne eines Kantenbruchs der Vorbohrung (12) abgestimmt ist.

## Claims

**1.** A drilling device (10) for producing undercuts in non-continuous cylindrical pilot holes (12), having a drive machine (27) to which an axially impactable drill tool (15) is flexibly connected by a connecting coupling (20) lying outside the pilot hole, where a coupling piece (28) of the connecting coupling (20) and the drill shaft end (29) are assembled together like tongue and groove, having at the tip (13) of the drill tool (15) and radially projecting beyond the drill shaft periphery, a side cutter (14) which can be radially swung by a chamfered surface (17), which can be radially supported and which is on the drill tool (15), wherein the drill shaft (19) on its outer periphery, opposite the side cutter (14) of a cylindrical shaft section (19) is flattened by an amount to permit insertion into the pilot hole, characterised in that the coupling piece (28) is cylindrical having a hemispherical end (30) and the drill shaft end (29) having a correspondingly hemispherical base (31), that both coupling components coupling piece (28), drill shaft end (29) are connected to each other for rotary drive by a transverse pin 32, which allows the side cutter (14) to perform the radial pivot movements, that the drill shaft (19) has a first (21), its axial movement position as well as a second (22), pivot stop (21, 22) which determines the maximum radial pivoting of the side cutter (14), which in each case come to rest on the coupling piece (28) of the connection coupling (20), that the chamfered surface (17') which can be radially supported is arranged at the side of the drill shaft end and can be impacted by an axially movable thrust body (85) of the connecting coupling (20), that the radius (r) at the drive side of the cylindrical shaft section (19') of the drill shaft (10) is smaller than the shaft radius measured across the side cutter (14) and that the flexible connection of the drill tool (15) to the drive machine (27) is radially fixed relative to the workpiece (46).

**2.** A device as claimed in claim 1, characterised in that the drill shaft (19) is arranged eccentrically to the axis of rotation of the drill tool (15).

**3.** A device as claimed in claim 1 or 2, characterised in that the side cutter (14) having the cross section of the undercut (11) is cambered in the direction of rotation and is provided with drilling powder at least on its cutting surfaces (100).

4. A device as claimed in one or more of the claims 1 through 3, characterised in that there is a shaft form 23 which by centrifugal force causes the radially non-impacted, rotating drill shaft (19) to pivot to its first stop (21).

5. A device as claimed in one or more of the claims 1 through 4 characterised in that the radially non-impacted drill shaft (19) is arranged on the identical axis to the axis of rotation (62) of the connecting coupling (20) of the drill tool (15) fitted with an axial cutter (84), and that when the side cutter (14) is in its maximum pivot position, the drill shaft (19) has a flattened region (18) parallel to the pilot hole (12) and between the side cutter (14) and the connecting coupling (20).

6. A device as claimed in one or more of the claims 1 through 5, characterised in that the thrust body (85) has a rotational symmetrical grip piece (86) which is axially non-displaceably attached outside on the thrust body (85) by a rolling bearing (87) and/or that the thrust body (85) is a sleeve axially resiliently supported on the connecting coupling (20) and which has at the drill shaft side a widening thrust cone (88) and that the chamfered surface (17′) is a cone ring surface of the drill shaft end (29).

7. A device as claimed in one or more of the claims 1 through 6 characterised in that the shaft form (23) comprises a recess of the drill shaft (19), the recess being above the hinge point (24) of the connecting coupling (20) and diametrically opposite the side cutter (14), and/or that if the side cutter (14) is designed in steel or hard metal, the shaft form has a shaft recess (25) which lies in the direction of rotation (26) in advance of the cutter (14) and releases the cutter (14) in order to pick up the material.

8. A device as claimed in one or more of claims 1 through 7 characterised in that the coupling piece (28) is a tongue shape and the drill shaft end (29) is a groove shape, and that the drill shaft end (29) has a wall section (33) which forms the first pivot stop (21) and a further wall section (34) which forms the second pivot stop (22).

9. A device as claimed in one or more of the claims 1 through 8, characterised in that the drill shaft (19) and the coupling piece (28) are provided with in-line flushing and/or air channels (35, 36), that the bore hole expands (38) in the transition region lying in between the two channels (35, 36), and/or that the channel (36) in the region of the transverse pin (32) is formed by an annular groove (39) of this transverse pin (32).

10. A device as claimed in claim 8, characterised in that the groove-shaped drill shaft end (29) at the drive side of the transverse pin (32) is approximately the same length as the other drill shaft section and/or that the drill shaft outer periphery located between the side cutter (14) and the connecting coupling (20) (flattened region 18), is on the identical axis to the wall section forming the second pivot stop (22) and that the drill shaft outer periphery (89) opposite the above-mentioned drill shaft outer periphery is on the identical axis to the wall section forming the second pivot stop (21).

11. A device as claimed in one or more of claims 1 through 10, characterised in that the drill shaft tip (13) fitted with axial cutters (84) and/or with drilling powder (85) is fitted with an axial projection or axial recess (13′) or is designed level transverse to the shaft axis (62′) and/or that the drive device (27) is fixedly attached or is provided with a locking device.

12. A device as claimed in one or more of the claims 1 through 11, characterised in that the drill shaft end (29) is connected by a conical part of the shaft (29′) to the drill shaft section supporting the side cutter (14), that the part of the shaft (29′) is fitted with drilling powder and that the length of the drill shaft section supporting the side cutter (14) matches the depth of the pilot hole (12) in the sense of the pilot hole (12) being chamfered.

**Revendications**

1. Dispositif de perçage (1O) pour la fabrication de dépouilles dans des perçages préalables cylindriques non traversants (12), comportant un moteur d'entraînement (27) auquel est relié de façon articulée, à l'aide d'un accouplement de liaison (2O) situé à l'extérieur du perçage préalable, un outil de perçage (15) apte à être

EP 0 336 182 B1

sollicité axialement, un élément d'accouplement (28) de l'accouplement de liaison (2O) de l'extrémité (29) de la tige de perçage étant assemblés suivant un montage du type mâle/femelle, et comportant une lame latérale (14) qui fait saillie radialement par rapport à la circonférence de la tige de perçage, à la pointe (13) de l'outil de perçage (15), et qui peut pivoter radialement grâce à une surface inclinée (17′) prévue au niveau de l'outil de perçage (15) et apte à servir de support radialement, étant précisé que la tige de perçage (19) est aplatie, sur sa circonférence extérieure, opposée à la lame latérale (14), d'une section de tige cylindrique (19′), suivant un degré permettant l'introduction dans le perçage préalable (12), caractérisé en ce que l'élément d'accouplement (28) présente une configuration cylindrique à extrémité hémisphérique (3O), et l'extrémité (29) de la tige de perçage possède un fond (31) d'une forme hémisphérique correspondante, en ce que les deux pièces d'accouplement (élément d'accouplement 28, tige 29 de la tige de perçage) sont reliées entre elles, solidaires en rotation, par une cheville transversale (32) autorisant les mouvements pivotants radiaux de la lame latérale (14), en ce que la tige de perçage (19) possède des première (21) et seconde (22) butées de position de pivotement (21, 22) qui définissent la position de déplacement axial et le pivotement radial maximal de la lame latérale (14), et qui viennent chacune buter au niveau de l'élément d'accouplement (28) de l'accouplement de liaison (2O), en ce que la surface inclinée (17′) apte à servir de support radialement est disposée côté extrémité de la tige de perçage et est apte à être sollicitée par un corps de pression (85) de l'accouplement de liaison (2O), mobile axialement, en ce que le rayon (r), prévu côté entraînement, de la section de tige cylindrique (19′) de la tige de perçage (10) est inférieur au rayon mesuré sur la lame latérale (14), et en ce que le raccord articulé entre l'outil de perçage (15) et le moteur d'entraînement (27) est stationnaire radialement par rapport à l'élément de perçage (46).

2. Dispositif selon la revendication 1, caractérisé en ce que la tige de perçage (19) est disposée de façon excentrique par rapport à l'axe de rotation de l'outil de perçage (15).

3. Dispositif selon la revendication 1 ou 2, caractérisé en ce que la lame latérale (14) présentant la section transversale de la dépouille (11) est bombée dans le sens de rotation et pourvue, au moins sur ses surfaces tranchantes (1OO), de poudre de perçage.

4. Dispositif selon l'une des revendications 1 à 3, caractérisé en ce qu'il est prévu une forme de tige (23) entraînant, au niveau de sa première butée (21), par la force centrifuge, le pivotement de la tige de perçage (19) non sollicitée radialement et tournant.

5. Dispositif selon l'une au moins des revendications 1 à 4, caractérisé en ce que la tige de perçage (19) non sollicité radialement est disposée suivant le même axe que l'axe de rotation (62) de l'accouplement de liaison (2O) de l'outil de perçage (15) pourvu d'une lame axiale (84), et en ce qu'il est prévu, entre la lame latérale (14) et l'accouplement de liaison (2O), un aplatissement (18) de la tige de perçage (19) qui est parallèle au perçage préalable (12) lors d'un pivotement maximal de la lame latérale (14).

6. Dispositif selon l'une au moins des revendications 1 à 5, caractérisé en ce que le corps de pression (85) possède un élément de manipulation (86) à rotation symétrique, qui est monté à l'extérieur, fixe axialement, sur le corps de pression (85) comportant un palier lisse (87), et/ou en ce que le corps de pression (85) consiste en un manchon supporté axialement, de façon élastique, au niveau de l'accouplement de liaison (2O) et comportant un cône de pression (88) s'élargissant côté tige de perçage, et en ce que la surface inclinée (17′) consiste en une surface annulaire conique de l'extrémité (29) de la tige de perçage.

7. Dispositif selon l'une au moins des revendications 1 à 6, caractérisé en ce que la forme de tige (23) se compose d'une cavité de la tige de perçage (19) située au-dessus du point d'articulation (24) de l'accouplement de liaison (2O), diamétralement opposée à la lame latérale (14), et/ou en ce que la forme de tige possède, lorsque la lame latérale (14) est en acier ou en métal dur, une cavité de tige (25) située devant la lame (14), dans le sens de rotation (26), et laissant la lame (14) libre en vue d'enlever de la matière.

8. Dispositif selon l'une au moins des revendications 1 à 7, caractérisé en ce que l'élément d'accouplement (28) est conçu comme un élément mâle et l'extrémité (29) de la tige de perçage comme un élément femelle, et en ce que l'extrémité (29) de la tige de perçage possède une section de paroi (33) définissant la première butée de position de pivotement (21), et une autre section de paroi (34) définissant la seconde butée de position de pivotement (22).

9. Dispositif selon l'une au moins des revendications 1 à 8, caractérisé en ce que la tige de perçage (19) et l'élément d'accouplement (28) sont pourvus de canaux de rinçage et/ou d'aérage (35, 36) dans l'alignement l'un de l'autre, en ce qu'il est prévu, dans la zone de transition (37) située entre les deux canaux (35, 36), un élargissement de perçage (38) et/ou en ce que le canal (36) est défini, dans la zone de la cheville transversale (32), par une rainure annulaire (39) de cette cheville transversale (32).

1O. Dispositif selon la revendication 8, caractérisé en ce que l'extrémité (29) de la tige de perçage conçue comme un élément femelle est approximativement aussi long, du côté de la cheville transversale (32) situé côté entraînement, que l'autre section de tige de perçage et/ou en ce que la circonférence extérieure de tige de perçage située entre la lame latérale (14) et l'accouplement de liaison (20) (aplatissement 18) présente le même axe que la section de paroi définissant la seconde butée de position de pivotement (22), et en ce que la circonférence de tige de perçage (89) opposée à la circonférence extérieure de tige de perçage mentionnée précédemment présente le même axe que la section de paroi définissant la seconde butée de position de pivotement (21).

11. Dispositif selon l'une au moins des revendications 1 à 10, caractérisé en ce que la pointe (13) de la tige de perçage pourvue de lames axiales (84) et/ou de poudre de perçage (84) est pourvue d'une partie axialement saillante ou en retrait (13') ou présente une configuration plane transversalement à l'axe de tige (62') et/ou en ce que le dispositif d'entraînement (27) est monté de façon stationnaire ou est pourvu d'un dispositif de retenue.

12. Dispositif selon l'une au moins des revendications 1 à 11, caractérisé en ce que l'extrémité (29) de la tige de perçage fait suite, avec une partie conique (29'), à la section de tige de perçage portant la lame latérale (14), en ce que la partie de tige (29') est pourvue de poudre de perçage, et en ce que la longueur de la section de tige de perçage portant la lame latérale (14) est adaptée à la profondeur du perçage préalable (12) dans le sens d'une rupture d'arête de celui-ci.

FIG. 1

FIG.1a

FIG.1c

FIG.1b

15

B-B

*FIG.2a*

*FIG. 2*

A-A

*FIG.2b*

FIG. 3

FIG.4

FIG. 5

FIG.6

FIG.6b

FIG.6a

EP 0 336 182 B1

FIG. 7

FIG. 7a

EP 0 336 182 B1

FIG.8a

FIG.8

FIG.9a

FIG.9